# EUROPEAN PATENT APPLICATION

(11) **EP 4 549 052 A1**
(43) Date of publication of application: **07.05.2025**
(21) Application number: 23831013.0
(22) Date of filing: 08.06.2023
(51) Int. Cl.: B22F 1/00, B22F 1/16, B22F 3/16, B22F 10/28, B33Y 70/00, B33Y 80/00, C22C 19/05, C22F 1/00, C22F 1/10

(54) **NICKEL-BASED ALLOY POWDER FOR LAMINATION MOLDING AND LAMINATION MOLDED BODY**

(30) Priority: 28.06.2022 JP 2022104016
(71) Applicant: Sanyo Special Steel Co., Ltd., Himeji-shi, Hyogo 672-8677 (JP)
(72) Inventor: HAGIYA Toru, Himeji-shi, Hyogo 672-8677 (JP)
(74) Representative: Potter Clarkson
(86) International application number: PCT/JP2023/021285
(87) International publication number: WO 2024/004563

(57) **Abstract**

Disclosed herein are a powder for metal additive manufacturing having excellent high-temperature strength and cracking resistance and an additively manufactured article having excellent high-temperature strength produced using the powder for additive manufacturing. The mixed powder for additive manufacturing includes: a Ni-based alloy powder containing, as a chemical component, at least one or two of Ai and Ti in a range of 0.5 mass% ≤ (Al + 1/2Ti) ≤ 2.8 mass%; and oxide nanoparticles attached to a surface of the Ni-based alloy powder.

## Description

### TECHNICAL FIELD

The present invention relates to a Ni-based alloy powder for additive manufacturing and an additively manufactured body.

### BACKGROUND ART

A method for producing a three-dimensional shaped article is known in which a powder material is irradiated with a laser or an electron beam (hereinafter referred to as selective laser sintering). For example, metal stereolithography is known in which a powder layer composed of a metal powder is irradiated with an optical beam to form a sintered layer and such sintered layers are stacked to obtain a three-dimensional shaped article. Therefore, methods for producing a metal powder for metal stereolithography have been proposed. Examples of a typical method of metal additive manufacturing include a powder bed method (powder bed fusion method) and a metal deposition method (direct energy deposition method).

In the powder bed method, a powder is laid and irradiated with a laser beam or an electron beam so that the powder in an irradiated area is fused and solidified. Such fusion and solidification allow powder particles to bond together. The irradiation is selectively performed on part of the metal powder, and therefore fusion does not occur in a non-irradiated area and a bonding layer is formed only in an irradiated area.

On the bonding layer thus formed, a new metal powder is further laid, and the metal powder is irradiated with a laser beam or an electron beam. As a result of the irradiation, metal particles are fused and solidified to form a new bonding layer. The new bonding layer is bonded also to the existing bonding layer.

Such irradiation-induced fusion and solidification are repeated one after another so that an assembly of bonding layers gradually grows. As a result of the growth, a shaped body having a three-dimensional shape is obtained. The use of such an additive manufacturing method makes it easy to obtain a shaped article having a complicated shape.

Patent Literature 1 (JP2008-81840A) proposes, as an additive manufacturing method by metal deposition method (direct energy deposition method), a method for producing a metal powder for metal stereolithography, the method comprising mixing an iron-based powder and at least one powder selected from the group consisting of nickel, a nickel-based alloy, copper, a copper-based alloy, and graphite (see Patent Literature 1).

In such metal additive manufacturing, the flowability of a powder is important for achieving high fillability when the powder is laid. A best-known method to improve the flowability of a powder is to increase the circularity of the powder.

Patent Literature 2 (JP6716205B) proposes a method for improving flowability, the method comprising dry mixing an alloy powder (e.g., a powder of a nickel alloy, Inconel^{®} 718) with fumed silica or nano carbon in a trace amount of less than 100 ppm as a treating agent to attach the treating agent to the surface of the alloy powder.

However, this proposal is intended only to improve flowability by mixing the alloy powder with a trace amount of the treating agent to attach the treating agent to the surface of the alloy powder, and therefore does not consider as preferable attaching the treating agent by mixing to the extent that the blending ratio of the powder is influenced thereby. Therefore, this proposal is not intended to actively improve the characteristics of a shaped body to be obtained.

### CITATION LIST

### PATENT LITERATURE

Patent Literature 1: JP2008-81840A
Patent Literature 2: JP6716205B

### SUMMARY OF INVENTION

It is an object of the present invention to provide a powder for metal additive manufacturing having excellent high-temperature strength and cracking resistance. It is another object of the present invention to provide an additively manufactured article having excellent high-temperature strength produced using the powder for additive manufacturing.

The present invention provides the following aspects:
[Aspect 1]
   A mixed powder for additive manufacturing, comprising:
   a Ni-based alloy powder containing, as a chemical component, at least one or two of Ai and Ti in a range of 0.5 mass% ≤ (Al + 1/2Ti) ≤ 2.8 mass%; and
   oxide nanoparticles attached to a surface of the Ni-based alloy powder.
[Aspect 2]
   The mixed powder for additive manufacturing according to aspect 1, wherein an amount of the oxide nanoparticles attached is 0.2 to 1.5 mass% relative to a mass of the mixed powder for additive manufacturing.
[Aspect 3]
   An additively manufactured body made of a Ni-based alloy, the additively manufactured body being produced by additive manufacturing using the mixed powder for additive manufacturing according to aspect 2.
[Aspect 4]
   An additively manufactured body made of a Ni-based alloy, comprising: Al and Ti in a range satisfying a relational expression: 0.5 mass% ≤ (Al + 1/2Ti) ≤ 2.8 mass%; and an oxide in an amount of 0.2 to 1.5 mass%.

The oxide nanoparticles preferably have a primary particle diameter in the range of 1 to 100 nm.

It is desirable that the oxide nanoparticles are not surface-treated with an organic material.

The oxide nanoparticles are preferably composed of any one or more of Y₂O₃, ThO₂, Al₂O₃, TiO₂, and SiO₂, more preferably composed of Y₂O₃ and/or A₂2O₃, and even more preferably composed of Y₂O₃.

When additive manufacturing is performed using the mixed powder for additive manufacturing according to the present invention, the oxide is finely dispersed in a resultant additively manufactured body, and therefore the additively manufactured body exhibits excellent high-temperature strength.

By attaching the oxide nanoparticles to the surface of the metal powder by mixing, the oxide nanoparticles are positioned between metal powder particles, and as a result the metal powder particles do not come in direct contact with each other, thereby reducing adhesive power between these particles. For this reason, the mixed powder for additive manufacturing according to the present invention makes it possible to improve the flowability of the alloy powder material.

As for the chemical components Al and Ti in the Ni alloy powder, when the value of Al + 1/2Ti is less than 0.5 mass%, high-temperature strength is poor, and when the value of Al + 1/2Ti is larger than 2.8 mass%, the strength of a test specimen is reduced due to the occurrence of solidification cracking. In the present invention, the value of Al + 1/2Ti of the Ni-based alloy powder is set to 0.5 to 2.8 mass%, which makes it possible to, when additive manufacturing is performed using the mixed powder in which the oxide nanoparticles are attached to the surface of the Ni-based alloy powder, produce an additively manufactured body having high-temperature strength due to strengthened particle dispersion while being less likely to suffer from a reduction in strength caused by solidification cracking.

### DESCRIPTION OF EMBODIMENTS

### [Production of Ni-based alloy atomized powder as base of material under test]

Ni-based alloy powders used as base powders in Examples No. 1 to No. 5 (examples of the present invention) and Comparative Examples No. 6 to No. 10 are composed of chemical components shown in Table 1 or 2. These powders were produced by gas atomization. The gas atomization used to produce the powders was performed by fusing raw materials, which were blended in a predetermined ratio in an alumina crucible in vacuum, by high-frequency induction heating, dropping the fused alloy through a nozzle with a diameter of about 5 mm located under the crucible, and atomizing it with high-pressure argon or high-pressure nitrogen.

The average particle diameter D₅₀ (µm) and the sphericity of each of the resulting Ni-based alloy powders are shown in Tables 5 and 6. The average particle diameter D₅₀ herein refers to a volume-average particle diameter D₅₀.

**[Table 1]**

| | | C | Ni | Cr | Fe | Al | Ti | Si | B | S | Al+1/2Ti |
|---|---|---|---|---|---|---|---|---|---|---|---|
| Examples | 1 | 0.04 | Bal. | 20.10 | 1.13 | 0.32 | 0.51 | 0.12 | 0.0014 | 0.001 | 0.58 |
| | 2 | 0.10 | Bal. | 19.30 | 0.98 | 0.51 | 1.21 | 0.16 | 0.0008 | 0.002 | 1.12 |
| | 3 | 0.05 | Bal. | 18.90 | 1.50 | 1.60 | 2.37 | 0.04 | 0.0004 | 0.002 | 2.79 |
| | 4 | 0.10 | Bal. | 21.12 | 0.99 | 0.29 | 0.61 | 0.09 | 0.0017 | 0.001 | 0.60 |
| | 5 | 0.06 | Bal. | 20.10 | 1.98 | 0.33 | 0.47 | 0.08 | 0.0010 | 0.002 | 0.57 |

**[Table 2]**

| | | C | Ni | Cr | Fe | Al | Ti | Si | B | S | Al+1/2Ti |
|---|---|---|---|---|---|---|---|---|---|---|---|
| Comparative Examples | 6 | 0.05 | Bal. | 21.10 | 0.87 | 0.15 | 0.29 | 0.21 | 0.0013 | 0.002 | 0.30 |
| | 7 | 0.06 | Bal. | 20.97 | 1.21 | 1.82 | 2.44 | 0.31 | 0.0011 | 0.001 | 3.04 |
| | 8 | 0.04 | Bal. | 19.74 | 1.40 | 0.29 | 0.49 | 0.07 | 0.0015 | 0.002 | 0.54 |
| | 9 | 0.10 | Bal. | 18.73 | 1.25 | 0.33 | 0.54 | 0.08 | 0.0008 | 0.002 | 0.60 |
| | 10 | 0.04 | Bal. | 20.10 | 1.13 | 0.32 | 0.51 | 0.12 | 0.0014 | 0.001 | 0.58 |

The underline indicates that the value is out of the range specified in the present invention.

### [Al + 1/2Ti: 0.5 to 2.8 mass%]

When the value of Al + 1/2Ti of the Ni-based alloy powder is less than 0.5 mass%, high-temperature strength is poor, and when the value of Al + 1/2Ti is larger than 2.8 mass%, the strength of a test specimen is reduced due to the occurrence of solidification cracking. The solidification cracking is more likely to occur when a solid-liquid coexisting region is wider. For this reason, in the present invention, the value of Al + 1/2Ti is set to 0.5 to 2.8 mass%. This makes it possible for an additively manufactured body produced by additive manufacturing using such a mixed powder to have high-temperature strength due to strengthened particle dispersion and to be less likely to suffer from a reduction in strength caused by solidification cracking. From such a viewpoint, the value of Al + 1/2Ti is 0.5 to 2.8 mass%, preferably 0.5 to 2.0 mass%, more preferably 0.5 to 1.5 mass%, even more preferably 0.6 to 1.0 mass%.

### [Form of metal powder]

The average particle diameter D₅₀ of the Ni-based alloy powder preferably satisfies 2 µm ≤ D₅₀ ≤ 150 µm, more preferably satisfies 10 µm ≤ D₅₀ ≤ 90 µm, even more preferably satisfies 25 µm ≤ D₅₀ ≤ 40 µm. When the size of the alloy powder is 2 µm or more, excessive particle size reduction can be prevented to improve the flowability of the powder. Further, when the size of the alloy powder is 150 µm or less, the filling rate of the powder increases so that the density of a resultant additively manufactured body increases.

### [Method for measuring D₅₀]

In the measurement of the average particle diameter D₅₀, the total volume of the powder is taken as 100% to determine a cumulative curve. The particle diameter at a point where a cumulative volume is 50% on this curve is defined as D₅₀. The particle diameter D₅₀ is measured by laser diffraction scattering. An example of an apparatus suitable for such measurement is a laser diffraction/scattering particle size distribution analyzer "Microtrac MT3000" manufactured by NIKKISO CO., LTD. The powder is poured into the cell of this analyzer together with pure water to detect particle diameters on the basis of light scattering information of particles.

### [Sphericity of powder]

The sphericity of the powder is preferably 0.80 or more and 0.95 or less. When having a sphericity of 0.80 or more, the powder is excellent in flowability. From such a viewpoint, the sphericity is more preferably 0.83 or more, particularly preferably 0.85 or more. When the powder has a sphericity of 0.95 or less, laser reflection can be prevented. From such a viewpoint, the sphericity is more preferably 0.93 or less, particularly preferably 0.90 or less.

In the measurement of the sphericity, a test specimen is provided by embedding the powder in a resin. Such a test specimen is subjected to mirror polishing to observe a polished surface with an optical microscope. The magnification of the microscope is 100. Twenty particles randomly selected are subjected to image analysis to measure the sphericity of each of the particles. The average of measured values of the 20 particles is defined as the sphericity of the powder. The sphericity refers to the ratio between the maximum length of one particle of the powder and the length of the particle in a direction normal to the maximum length.

### [Oxide nanoparticles]

In each of the examples and the comparative examples, oxide nanoparticles having a composition shown in Table 3 or 4 were used. As the oxide nanoparticles, Y₂O₃ nanoparticles (average particle diameter 29 nm), Al₂O₃ nanoparticles (average particle diameter 34 nm), or SiO₂ nanoparticles (average particle diameter 45 nm) manufactured by CIK NanoTek Corporation were used.

It should be noted that basically, the oxide hardly reacts with the Ni-based alloy in a temperature range of 1300 to 1400°C where Ni is fused and stably remains as an oxide, and therefore has no effect on a solid-liquid coexisting region. When the solid-liquid coexisting region is wider, solidification cracking is more likely to occur, but the oxide can be said to be less likely to have such an effect.

### [Form of oxide nanoparticles]

The oxide nanoparticles preferably have a primary particle diameter of 1 to 100 nm. When the particle diameter is smaller, the effect of oxide dispersion strengthening (ODS) in additive manufacturing is larger, and therefore the size of the oxide nanoparticles is more preferably 1 to 50 nm, even more preferably 1 to 30 nm. It should be noted that the primary particle diameter of the attached oxide nanoparticles in the mixed powder is the same as the primary particle diameter of the oxide nanoparticles before mixing, and the primary particle diameter can be determined on the basis of specific surface area measurement by gas adsorption.

**[Table 3]**

| | | Oxide |
|---|---|---|
| Examples | 1 | Y₂O₃: 0.61 |
| | 2 | Y₂O₃: 0.57 |
| | 3 | Al₂O₃: 0.64 |
| | 4 | Y₂O₃: 0.24 |
| | 5 | SiO₂: 1.34 |

**[Table 4]**

| | | Oxide |
|---|---|---|
| Comparative Examples | 6 | Y₂O₃: 0.55 |
| | 7 | Y₂O₃: 0.63 |
| | 8 | Al₂O₃: 0.12 |
| | 9 | SiO₂: 1.74 |
| | 10 | - |

The underline indicates that the value is out of the range specified in the present invention.
* Each of the values next to the composition formula in Tables 3 and 4 refers to the amount (mass%) of the oxide nanoparticles attached relative to the mass (100 mass%) of the mixed powder for additive manufacturing.

### [Mixing of metal powder and oxide nanoparticles]

A mixed power in which the oxide nanoparticles were attached to the surface of the metal powder was produced by mechanical mixing using a V-type mixer. The mixing of the powder can be performed also by a tumbler mixer, a ball mixer, or another tool as long as the oxide nanoparticles are attached to the surface of the metal powder. Alternatively, the powder may be manually mixed in a container.

### [Removal of unattached oxide nanoparticles]

Even after such a mixing operation, the oxide nanoparticles may remain without attaching to metal powder particles. The oxide nanoparticles have a size of several micrometers to several hundred micrometers. Therefore, such unattached oxide nanoparticles were removed by sieve classification. Through such a removal step, a more suitable mixed powder material can be obtained.

### [Amount of oxide nanoparticles added: 0.2 to 1.5%]

In the present invention, the amount of the oxide nanoparticles added to the alloy powder is preferably 0.2 to 1.5 mass%, preferably 0.25 to 1.0 mass%. When the amount of the oxide nanoparticles added is 0.2% or more, the effect of oxide dispersion strengthening (ODS) can sufficiently be obtained. On the other hand, when the amount of the oxide nanoparticles added is 1.5% or less, oxide aggregates are less likely to be generated, thereby increasing strength.

Through the above procedure, a mixed powder for additive manufacturing was produced in which the oxide nanoparticles having a composition shown in Table 3 or 4 were attached in an amount shown in Table 3 or 4 to the surface of each of the Ni-based alloy powders of Examples No. 1 to No. 5 and Comparative Examples No. 6 to No. 10 having a composition shown in Table 1 or 2.

### [Production of test specimen by metal additive manufacturing]

Tensile test specimens and rupture test specimens were produced by metal additive manufacturing with selective laser melting (SLM) method using each of the mixed powders for additive manufacturing of Examples No. 1 to No. 5 and Comparative Examples 6 to No. 10 obtained by attaching the nanoparticles to the surface of the metal powder through the above processing.

It should be noted that the additive manufacturing method using the powder according to the present invention is not limited thereto and may be binder jetting method, electron beam melting (EBM) method, or laser deposition method.

### [Heat treatment of additively manufactured body]

The resulting additively manufactured body was subjected to solution annealing at 1000°C for 1 hour as solution heat treatment and then air-cooled.

### [Hausner ratio]

The Hausner ratio is an index defined as tap density/apparent density. When the Hausner ratio of a powder is lower, the powder is more excellent in flowability.

The tap density was evaluated as the packing density of a powder determined by packing about 50 g of the powder in a cylinder having a volume of 100 cm³ and repeatedly dropping the cylinder under conditions where a drop height was 10 mm and the number of times of tapping was 200.

### [Rupture test]

A creep-rupture test specimen having a parallel part with a diameter of 6 mm was produced and subjected to a rupture test (break test) at 650°C or 760°C to calculate rupture strength after 1000 h. The rupture strength after 1000 h is used as an index of creep characteristics of a high-temperature material.

Specifically, in the rupture test, measurement of rupture time at a certain load stress was performed more than once by changing the condition of load stress. The measurement results were plotted on a graph representing the relationship between load stress vs rupture time, on the basis of which the stress at which rupture would occur after 1000 h was read and calculated as rupture strength after 1000 h.

### [0.2% proof stress]

A tensile test was performed by a test method in accordance with JIS Z2241 using the obtained additively manufactured body as a test specimen. The calculation of 0.2% proof stress was performed in the following manner. The slope (elastic modulus) at any point at which the test specimen was regarded as elastic in a stress-strain relationship was determined to draw a straight line, this straight line thus determined was offset to 0.2% strain, and the intersection between the offset straight line and the stress-strain relationship was read as 0.2% proof stress.

The characteristics of the additively manufactured bodies respectively using the mixed powders of Examples No. 1 to No. 5 and Comparative Examples No. 6 to No. 10 are shown in Tables 5 and 6.

**[Table 5]**

| | | D₅₀ (µm) | Sphericity | 0.2% proof stress (MPa) at 650°C | Rupture strength (MPa) at 650°C | Rupture strength (MPa) at 760°C | Hausner ratio |
|---|---|---|---|---|---|---|---|
| Examples | 1 | 15.3 | 0.91 | 478 | 254 | 132 | 1.12 |
| | 2 | 27.3 | 0.92 | 593 | 300 | 136 | 1.14 |
| | 3 | 87.2 | 0.89 | 868 | 410 | 155 | 1.13 |
| | 4 | 31.6 | 0.88 | 388 | 230 | 127 | 1.09 |
| | 5 | 107.8 | 0.91 | 680 | 355 | 142 | 1.08 |

**[Table 6]**

| | | D₅₀ (µm) | Sphericity | 0.2% proof stress (MPa) at 650°C | Rupture strength (MPa) at 650°C | Rupture strength (MPa) at 760°C | Hausner ratio |
|---|---|---|---|---|---|---|---|
| Comparative Examples | 6 | 64.8 | 0.93 | 416 | 220 | 119 | 1.14 |
| | 7 | 33.1 | 0.94 | 875 | 224 | 116 | 1.11 |
| | 8 | 10.2 | 0.80 | 333 | 145 | 70 | 1.15 |
| | 9 | 80.4 | 0.89 | 778 | 205 | 109 | 1.14 |
| | 10 | 12.1 | 0.73 | 304 | 121 | 62 | 1.28 |

The underline indicates that the value is out of the range specified in the present invention.

In the case of the Ni-based alloy mixed powders for additive manufacturing of Examples

No. 1 to No. 5, the value of Al +1/2Ti of the Ni-based alloy powder used as a base is 0.5 to 2.8 mass%, and the oxide nanoparticles are contained in an amount of 0.2 to 1.5 mass% relative to the mass of the mixed powder. Each of these mixed powders is excellent in flowability because the Hausner ratio is as low as 1.14 or less and the Ni-based alloy powder used as a base has a high sphericity and an D₅₀ in the appropriate range. Further, the additively manufactured bodies obtained respectively using these mixed powders are less likely to cause solidification cracking and have excellent high-temperature strength as shown by the results of proof stress and rupture strength. Since an appropriate amount of the oxide nanoparticles is attached to the Ni-based alloy powder, the effect of particle dispersion strengthening is large, which contributes not only to improved flowability but also to improved high-temperature strength.

In Comparative Example 6, the amount of Al + 1/2Ti was too small, and therefore high-temperature strength was low.

In Comparative Example 7, the amount of Al + 1/2Ti was too large, and therefore high-temperature strength was low due to the occurrence of solidification cracking.

In Comparative Example 8, the amount of the oxide nanoparticles was too small, and therefore high-temperature strength was low.

In Comparative Example 9, the amount of the oxide nanoparticles was too large, and therefore sputtering occurred during laser irradiation so that the number of holes in the additively manufactured body increased and thus high-temperature strength was low.

In Comparative Example 10, no oxide nanoparticles were added, and therefore high-temperature strength was low, and in addition, flowability was poor due to a high Hausner ratio.

The powder according to the present invention is suitable as a metal powder for additive manufacturing by powder bed method, deposition method, electron beam method, or binder jetting method. Further, an additively manufactured body obtained by additive manufacturing using this mixed powder is suitable as a heat-resistant part.

## Claims

1. A mixed powder for additive manufacturing, comprising:
a Ni-based alloy powder containing, as a chemical component, at least one or two of Ai and Ti in a range of 0.5 mass% ≤ (Al + 1/2Ti) ≤ 2.8 mass%; and
oxide nanoparticles attached to a surface of the Ni-based alloy powder.

2. The mixed powder for additive manufacturing according to claim 1, wherein an amount of the oxide nanoparticles attached is 0.2 to 1.5 mass% relative to a mass of the mixed powder for additive manufacturing.

3. An additively manufactured body made of a Ni-based alloy, the additively manufactured body being produced by additive manufacturing using the mixed powder for additive manufacturing according to claim 2.

4. An additively manufactured body made of a Ni-based alloy, comprising: Al and Ti in a range satisfying a relational expression: 0.5 mass% ≤ (Al + 1/2Ti) ≤ 2.8 mass%; and an oxide in an amount of 0.2 to 1.5 mass%.
